# EUROPEAN PATENT APPLICATION

(11) **EP 3 323 859 A1**
(43) Date of publication of application: **23.05.2018**
(21) Application number: 16199508.9
(22) Date of filing: 18.11.2016
(51) Int. Cl.: C09C 1/24, A61K 49/18, B82Y 30/00, C01G 49/08

(54) **METAL NANOPARTICLE SURFACE LIGAND REPLACEMENT METHOD**

(71) Applicant: Universität für Bodenkultur Wien, 1180 Wien (AT)
(72) Inventor: SHIRMARDI SHAGHASEMI, Behzad, 1190 Vienna (AT); REIMHULT, Erik, 1220 Vienna (AT)
(74) Representative: Sonn & Partner Patentanwälte

(57) **Abstract**

The invention relates to a method of producing inorganic nanoparticles with a polar surface,
a) providing an inorganic nanoparticle with a coordinated organic ligand to the nanoparticles surface,
b) providing a replacement salt comprising a replacement ion and a counterion,
c) treating the inorganic nanoparticle with the coordinated organic ligand with the replacement salt in the presence of a chelating agent that complexes the counterion, thereby increasing the replacements ion's reactivity and replacing the organic ligand on the nanoparticle surface by the replacement ion which results in an inorganic nanoparticle with a polar surface; and a kit.

## Description

### Field of the invention

The present invention relates to the field of nanoparticle surface treatment.

### Background of the invention

Nanoparticles and nanocrystals (NCs) have many applications in different areas including diagnostic, multimodal imaging, catalysis, electronics and optoelectronics and drug delivery. Such opportunities have led to the development of methods to synthesize a large variety of nanocrystals uniform in shape and size in high quantity. In order to tune the size and shape of NCs with low polydispersity during synthesis, stabilizing agents (mostly oleic acid) with high affinity to the NC surface are used (Park, et al. Nature materials 2004, 3, 891; Kwon, et al. Small 2011, 7, 2685.). These capping molecules are not optimal ligands for most applications, which typically require e.g. close proximity (thin shells) for efficient charge transfer between semiconductor NCs or dense shells of water soluble polymers for biomedical applications.

In some ligand replacement routes ligands with high affinity to the surface of NCs (chalcogenide for quantum dots or disodium 4,5-dihydroxy-1,3-benzenedisulfonate for iron oxide nanoparticles) have been used to replace the oleic acid. These processes are irreversible with no option for further surface modification of NCs. Addressing this problem by direct functional ligand replacement with similar high affinity binding groups is extremely challenging and requires extensive multi-step protocols for complete replacement (Bixner et al. Langmuir 2015, 31, 9198).

WO 2016/020524 describes nanoparticles with dense shells of organic compounds. In the manufacturing process, an inorganic particle may be created with a surfactant, such as oleic acid, to control crystal growth and sphericity. The surfactant is replaced by a linker or dispersant.

US 2016/167965 relates to semimetal nanocrystal formation. An organic ligand is used during wet-chemical crystal formation. The ligand remains on the nanocrystals and disperses the crystals in an organic solvent.

WO 2015/172019, Chuang et al. (Nature Materials (2014), 13, 796) and Ning et al. (Nature Materials (2014), 13, 822) relate to semiconductor nanocrystals (PbS quantum dots) that are optimized for photovoltaic devices by modifying surface energy levels.

US 2015/004310 describes changing organic ligands on a nanocrystal with the aid of a chromatographic column and selected eluents.

US 2015/064103 describes a method for forming ferrite nanoparticles with a ligand.

US 2007/092423 relates to methods for the formation of CeO₂ nanoparticles by aging and heating Ce-surfactant complexes.

Boles et al. (Nature Materials (2016), 15, 141) is a review on tuning surface properties of nanoparticles with surface ligands.

Balazs et al. (ACS Nano (2015), 9, 11951) relates to iodine-mediated ligand exchange for quantum dots.

Zhang (Journal of Physical Chemistry Letters (2016), 7, 642) discloses treating PbS nanocrystals with ammonium sulfide to remove existing ligands (oleic acid) and coating the nanocrystals with iodine.

Sayevich (Chemistry of Materials (2015), 27, 4328) discloses treating PbSe quantum dots with ammonium iodide in a ligand exchange reaction to replace oleic acid.

It is a goal of the present invention to provide a simple and efficient method to remove ligands from nanoparticle surfaces, preferably reversibly.

### Summary of the invention

The present invention provides a method of efficiently and thoroughly removing organic ligands from the surface of nanoparticles. Such organic ligands are common capping gents used in the synthesis of nanoparticles and need to be removed if the surface of the nanoparticles needs different chemical characteristics as mediated by the original ligand. Removing the ligand exposes the nanoparticle surface and renders the surface polar, in particular also hydrophilic.

In a main aspect, the invention provides a method of producing inorganic nanoparticles with a polar surface,
a) providing an inorganic nanoparticle with a coordinated organic ligand to the nanoparticle surface,
b) providing a replacement salt comprising a replacement ion and a counterion,
c) treating the inorganic nanoparticle with the coordinated organic ligand with the replacement salt in the presence of a chelating agent that complexes the counterion, thereby increasing the replacement ion's reactivity and replacing the organic ligand on the nanoparticle surface by the replacement ion which results in an inorganic nanoparticle with a polar surface.

Related there to, the invention also provides a specific kit suitable for removing an organic ligand from an inorganic nanoparticle. The kit comprises i) a halide salt, preferably a fluoride salt, ii) a chelating agent, preferably a crown ether, wherein said chelating agent is suitable for forming a complex with the cation of said halide salt, especially preferred wherein the crown ether is 15-crown-5 and said cation is sodium or said crown ether is 18-crown-6 and said cation is potassium or sodium, iii) an hydrophobic solvent, preferably an alkane like hexane, and iv) a polar organic solvent suitable to dissolve the chelating agent, preferably a C₁-C₅ alcohol like isopropanol; preferably wherein the hydrophobic solvent is a non-solvent or inferior solvent of the chelating agent than the polar solvent, preferably wherein solubility of the chelating agent in the polar solvent is at least 2 times, preferably at least 10 times, greater than solubility in the hydrophobic solvent at standard ambient conditions (25°C, 1 bar). Also provided is the use of the kit or its components i), ii), iii) or iv) in the inventive method.

### Detailed description of the invention

Surface modification of inorganic nanoparticles, which are usually in the form of nanocrystals (NCs), is crucially important since many applications of nanoparticles are dependent on controlling their interactions with each other and the surrounding medium through a ligand shell. To this end, it is desired to replace ligands that are used during controlled nanoparticle synthesis with functional ligands tailored to the particular application. The present invention uses chelating agents, like crown ethers, to assist in ligand replacement. These reactions can be facilitated at ambient temperature and neutral pH, which increases handling efficiency. Surprisingly, the inventive method leads to unprecedented completeness of the stripping of an existing ligand shell as well as maximal grafting density of re-grafted ligands on nanoparticles without changing the size and shape of the inorganic core of the nanoparticles. Provided is a simple, low-cost, environmentally friendlier and extraordinarily efficient and versatile method for ligand replacement on nanoparticles.

The present invention provides a method of removing a coordinated organic ligand from nanoparticles surface. Components used in the method are: a) an inorganic nanoparticle with a coordinated organic ligand to the nanoparticles surface, which is usually hydrophobic, and b) a replacement salt comprising a replacement ion and a counterion. The inventive method comprises the step of treating the inorganic nanoparticle with the coordinated organic ligand with the replacement salt in the presence of a chelating agent that complexes the counterion. The chelation increases the replacement ion's effective reactivity to replace and thereby remove the organic ligand from the nanoparticle surface. This step achieves the replacement of the organic ligand on the nanoparticle surface by the replacement ion which results in an inorganic nanoparticle with a hydrophilic and/or polar surface. Thereby, the original organic ligand to be removed is replaced by a new ligand, the replacement ion, in an exchange reaction, wherein the new ligand itself is easily removed, such as by simple solvation in a suitable solvent, such as a hydrophilic and/or polar solvent like water or other polar solvents.

As used herein, inorganic nanoparticle refers to a particle of an inorganic material, the inorganic nanoparticle core, which may comprise coordinated ligands bonded thereto, usually by coordination bond. The ligand can modify the surface properties of the nanoparticle, in particular the solubility in solvents with respect to polarity. Usually, the inorganic nanoparticle with the organic and hydrophobic ligand is suspended in a hydrophobic and/or nonpolar solvent. After replacement of the ligand, polarity of the nanoparticle changes; this can facilitate a phase transfer to a hydrophilic and/or polar solvent.

As used herein, "comprising" shall be understood as referring to an open definition, allowing further members of similar or other features. "Consisting of" shall be understood as a closed definition relating to a limited range of features. Preferably, the organic ligand is a surfactant, preferably an ionic surfactant, especially preferred a carboxylate, such as a fatty acid. The organic ligand can be a capping agent and/or a surfactant. A capping agent is a strongly adsorbed monolayer of usually organic ligands used to aid stabilization of nanoparticles. The surfactant comprises a hydrophilic head and a hydrophobic tail. The hydrophilic head is usually oriented and coordinated to the inorganic nanoparticle core and the tail is oriented away from the nanoparticle, thereby bestowing hydrophobic properties to the nanoparticle (in complex with the organic ligand). Example surfactants are fatty acids or amines thereof, such as oleic acid or oleyl amine. The organic ligand may comprise a hydrophilic group and an aliphatic chain of e.g. 5 to 30 C atoms, preferably 8 to 25 C atoms or more preferred 10 to 20 C atoms, in length. The aliphatic chain may be saturated or unsaturated, comprising one or more double or triple bonds. The hydrophilic group may e.g. be a negatively charged group, or a carbonyl group, such as a carboxylate, sulphate, phosphate. Preferably the organic ligand is negatively charged.

In preferred embodiments, an inorganic nanoparticle comprising a metal in complex with a surfactant on the particle surface is provided.

In a preferment for all embodiments and aspects of the invention, the inorganic particle core comprises preferably a metal or transition metal, e.g. selected from Fe, Cu, Au, Ag, Cr, Mn, Ti, Ni, Co, Pb, In, Cd, or any other element of the fourth or fifth row of the periodic table, or alloys thereof. In further embodiments the inorganic particle core comprises a metal, semi-metal, metalloid, a semiconductor or contains a non-metal material. Examples are Al, Si, Ge, or silica compounds. The inorganic nanoparticle core can be a nanocrystal or a multidomain crystallised nanoparticle composed of more than one nanocrystal. Example nanoparticles comprise a perovskite. Preferably the core comprises an oxide, sulfide or chalcogenide thereof, preferably a Fe oxide, such as Fe₂O₃ and/or Fe₃O₄, PbS, InP or another chalcogenide thereof. In a further embodiment, the inorganic nanoparticle core comprises a phosphite or an iron sulfide, preferably mixed oxide/hydroxide, nitride or sulfide of Fe (II) and/or Fe (III), e.g. in the form of a nanocrystal. Preferably, the inorganic nanoparticle core comprises Fe₃O₄ (magnetite) or comprises Fe₃O₄ spiked with any other metal, preferably those mentioned above. In further preferred embodiments, the nanoparticle core comprises PbS. "Metal" as used herein refers to the element, not to the state. The metal may be metallic (with neutral charge) or, as in most case of the present invention, non-metallic, especially in case of crystallized cationic metals.

In further preferments of all inventive aspects and embodiments, the inorganic core is magnetic, especially paramagnetic, preferably superparamagnetic. This property can be achieved by using metal nanoparticles of a material as described above, especially selected from the group consisting of iron, cobalt or nickel, alloys thereof, preferably oxides or mixed oxides/hydroxides, nitrides, carbides or sulfides thereof. In a preferred embodiment the stabilized magnetic nanoparticles are superparamagnetic iron oxide nanoparticles (SPIONs). Magnetic particles allow controlled mobility, such as for separation of enrichment of particles in a non-accessible compartment, e.g. in a patient's body by applying magnetic fields, or the capability to heat the particles by applying an oscillating field, in particular by radio wave irradiation, e.g. in the range of 10 kHz to 1000 kHz, e.g. 400 kHz.

In some embodiments of the invention, the inorganic particle core can be produced together with an organic ligand. Preferably the provided inorganic particle is in complex with an organic ligand on the particle surface, especially preferred in case of metal particles. Inorganic particles in complex with an organic linker can be obtained by treating the particle with an inorganic particle core with an organic ligand. An alternative may comprise the synthesis of the particle core in the presence of an organic ligand. Such a method may comprise thermal decomposition of dissolved metal-organic ligand complexes. Metal-organic ligand complexes in turn - without necessary limitation to this option - may be generated by treating a metal salt, such as a salt with a monovalent anion, preferably a halide such as a chloride (which is readily available), in particular iron chloride, with a negatively charged organic ligand such as a fatty acid as mentioned above (which are also well available), thereby forming a metal-ligand complex. The metal and ligand composition can be thermally decomposed to form the inorganic nanoparticle core. Thermal decomposition may comprise heating in a solvent to temperatures above 200 °C, in particular temperatures above 280°C, e.g. between 280°C and 350°C, preferably about 310-320°C. Suitable solvents are e.g. aliphatic hydrocarbons, such as 1-octadecene. Preferably the organic ligand comprises a carboxylic acid group, which decomposes during thermal decomposition to form a metal oxide (Park et al., supra; and Hyeon et al., supra; both incorporated herein by reference). Another preferred method comprises providing a metal complex, such as a metal carbonyl (e.g. Fe(CO)₅, Cr(CO)₆ or Ni(CO)₄), and treating the metal complex with an organic ligand in a solvent at elevated temperatures, e.g. between 150°C and 290°C, whereby the metal particle core forms in contact with the organic ligand (as disclosed in WO 2016/020524). In these methods, particle core size can be influenced by the concentration ratio of the metal complex and the organic ligand. Preferably the temperature in this method is gradually increased, e.g. by a temperature ramp, with the reaction already expected to start at a lower temperature, e.g. 170°C or lower, and for completion of the reaction is increased to a higher temperature, e.g. at least 240 °C. Accordingly, the inventive method may also comprise a preceding step wherein the inorganic nanoparticle with a coordinated organic ligand are produced by thermal decomposition of an inorganic nanoparticle-forming cation, preferably a cation of a metal or transition metal as described above, in the presence of the organic ligand.

The inorganic nanoparticle or its core preferably has a size of 1 nm to 400 nm, preferably 1.5 nm to 200 nm, especially preferred 1.8 nm to 100 nm, 2 nm to 80 nm, 3 nm to 50 nm or 4 nm to 30 nm. The inorganic nanoparticle can be provided in a plurality of inorganic nanoparticles or their cores with an average size of 1 to 400 nm, preferably 1.5 nm to 200 nm, especially preferred 1.8 nm to 100 nm, 2 nm to 80 nm, 3 nm to 50 nm or 4 nm to 30 nm. Such particles can be produced by the above mentioned method. Size may further improve the magnetic properties. E.g. a sufficiently small size may be selected to achieve superparamagnetic properties. The size for such an effect is dependent on the material and can be selected by a skilled person with average skill in view of prior knowledge.

In the inventive method, the inorganic nanoparticle with the coordinated organic ligand is reacted with the replacement salt in the presence of a chelating agent. The chelating agent complexes the counterion, thereby increasing the replacements ion's effective reactivity and capability to replace the organic ligand on the nanoparticle surface. The reactivity or effective reactivity is increased by shifting the reaction equilibrium by the complexation of the cation. "Effective" refers to the end state by the change in reactivity, where the ion is more frequently found to have reacted. The replacement salt shall have the same charge type as the organic ligand - it is preferably an anion. The replacement ion is usually polar and/or hydrophilic and is preferably a halogen ion, e.g. selected from F⁻, Cl⁻, Br⁻ or I⁻. Further suitable replacement ions are organic anions, such as tert-butoxide. Such replacement salts replace the organic ligand on the nanoparticle surface and take their place thus resolving the coordination with the nanoparticle core. The replacement ion may remain on the core surface and/or be removed from the surface, such as by solvation.

In principle, any counterion is suitable. Faster and hence more efficient reactions can be facilitated when the replacement ion has greater replacement capabilities in dependence of the used nanoparticle material and to lesser extent the organic ligand to be replaced. Such suitability for efficient replacement can be adjusted according to the principles of the HSAB theory ("hard and soft (Lewis) acids and bases") and electronegativity. HASAB theory is explained in Pearson et al., JACS 1963, 85(22): 3533-3539 (incorporated herein by reference) and all ions, especially the anions, can be used as inventive replacement ions. Any metal, acid or cation disclosed in Pearson may be present in the inventive inorganic nanoparticle, especially on its surface. The replacement ion is usually a base (with F⁻ being a hard base, hardness decreasing in the following order Cl⁻, Br⁻, I⁻, with Br⁻ and I⁻ being soft bases). The metal of the nanoparticle acts as an acid. Fe³⁺, as in iron oxide particles, is a hard acid and Pb²⁺ as in PbS quantum dots, is a soft acid. Preferably hard acids and bases are paired for efficient reactions and soft acids and bases are paired for efficient reactions. Thus preferably F⁻ is used on iron nanoparticles and Br⁻ or I⁻ is used on Pb nanoparticles, for example.

Examples of hard acids are: light alkali ions (Li through K all have small ionic radius), Ti⁴⁺, Cr³⁺, Cr⁶⁺, BF₃. Examples of hard bases are: OH⁻, F⁻, Cl⁻, NH₃, CH₃COO⁻, CO₃²⁻.

Examples of soft acids are: CH₃Hg⁺, Pt²⁺, Pd²⁺, Ag⁺, Au⁺, Hg²⁺, Hg₂²⁺, Cd²⁺, BH₃. Examples of soft bases are: H⁻, R₃P, SCN⁻, Br⁻, I⁻.

The counterion is preferably an inorganic ion, in particular a cation. Simple salts are preferred and therefore it is preferably a monovalent metal ion, especially preferred Na⁺, K⁺ or Li⁺. Such metal ions can be easily chelated by common chelating agents. Preferred chelating agents are heterocycles, preferably crown ethers or cryptands. Preferably the chelating agent has several atoms suitable for coordination to the counterion, such as oxygen, nitrogen or sulfur. Preferably the chelating agent has 4 to 10 such coordination atoms. The chelating agent may comprise linkers between neighbouring coordination atoms, such as short carbohydrate chains of C1-C6 in length. Crown ethers are e.g. with 5 oxygen atoms linked by C2 units such as in 15-crown-5 or with 6 oxygen atoms linked by C2 units such as 18-crown-6. The size of the cavity in the chelating agent determines the binding affinity to the counterion. The binding affinity is preferably sufficient to bind at least 99% of the counterions, thereby releasing the replacement ion from the ionically bound vicinity of the counterion. An affinity recited herein or any other binding or reaction conditions mentioned herein are at standard ambient conditions if not expressly disclosed otherwise. Standard ambient conditions are at 25°C and 1 bar absolute pressure.

Sufficient amounts of the replacement salt shall be used in relation to the amount of nanoparticles and organic ligands. Amounts, if not specified otherwise, are always molar amounts. Such amounts can be easily calculated by a skilled person. Preferably the replacement ion is used in excess, prefearbvly in excess to the organic ligand to be replaced. The amount ratio of chelating agent to the counterion is preferably about 1:1. About means +/- 20%. Other ratios can be readily used such as an excess of chelating agent or excess of counterion. The important part is that sufficient free replacement ion suitable for replacement of the organic ligand is available. "Free" replacement ion means that its counterion is bound by a chelating agent. The chelating agent shall have a higher affinity to the counterion than to the replacement ion, e.g. the affinity is 10 times or more, 100 times or more, 1000 times or more, 10000 times or more or even 100000 times or more, higher to the counterion than to the replacement ion, at ambient standard conditions.

Preferably amounts and reaction times are selected so that at least 50%, preferably at least 60%, at least 70%, at least 80% or at least 90%, or even at least 99% of the coordinated organic ligand are removed from the inorganic nanoparticle surface in the replacement step. Especially preferred, all organic ligands are removed from the nanoparticle surface.

The replacement step (step c)) is preferably performed in a fluid phase, e.g. in a hydrophobic liquid medium. In fluid phase, inorganic nanoparticles with a polar surface and/or with organic ligand removed can be continuously removed from said fluid phase. Such removal can be due to chemical affinity to another phase, such as a solid phase (capturing phase) or another fluid phase, such as a liquid medium with other hydrophilicity and greater affinity towards the nanoparticle surfaces when the organic ligand has been removed (or has been replaced by the replacement ion).

Preferably, the replacement step (step c)) comprises treating/reacting the replacement ion with the nanoparticles in a two-phasic fluid, preferably comprising a hydrophobic phase and a polar phase, especially preferred wherein inorganic nanoparticles with a polar surface are collected from the polar phase after or during step c). The hydrophobic phase may be a non-polar phase. Its relevant property is to be able to suspend the nanoparticles with the organic ligand and being immiscible with the polar phase, if such a polar phase is used. It is not required to suspend the nanoparticles after the replacement reaction that results in a polar surface. Usually, as the reaction progresses, the nanoparticles will transit to the other phase by themselves. This can be sped up by mixing the liquids so that the interphase surface increases. Efficient mixing can be achieved by sonication. A polar phase is e.g. an aqueous phase or comprises methylformamide. And a hydrophobic phase is e.g. a hydrocarbon phase, such as of a hydrocarbon of C4-C30 in length or mixtures of such hydrocarbons. As an alternative to the two-liquid-phasic reaction, the nanoparticles may also be allowed to precipitate as a result of the replacement reaction.

Preferably the replacement step (step c)) is at neutral or nearly neutral pH, e.g. at a pH of 5 to 9, preferably pH of 6 to 8. The inventive replacement reaction can occur at such (nearly) neutral conditions, which reduces the amount of waste materials and eases handling.

The replacement ion that may bind to the nanoparticle core may also be removed. Removal is easily facilitated by solvation. Thus the inventive method also may comprise the step (step d)) of removing the replacement ion on the inorganic nanoparticle surface by a solvent, preferably water, or by another ionic molecule or ion, preferably a molecule or ion of larger molecular or ionic size than the replacement ion and/or of higher affinity to the inorganic nanoparticle surface than the replacement ion. This other ionic molecule may be new a ligand suitable for an application of choice for the so grafted nanoparticle. Such uses are known in the art and some are summarised in the background of the invention section above. In connection thereto or as alternative, the inventive method also may comprise the step of binding another ligand to the inorganic core. This can be done on the "naked" nanoparticles, i.e. those with removed organic ligands as described above, or on the nanoparticles with bound replacement ions. The replacement ion is usually easily removed under suitable conditions (e.g. after transfer to a polar, especially aqueous phase and/or after removal (washing) of the chelating agents).

Such new or other ligands, also referred to as further organic ligand that can be attached to the polar surface of the nanoparticles obtained in step c), are e.g. a nitrodopamine (ND) compound optionally comprising an hydrophobic, e.g. aliphatic, chain, e.g. of 6 to 30 C in length, preferably 8 to 25 C or 10 to 20 C in length. Examples are ND-C16 ND-C11-SH, ND-C11-Br, ND-C8, ND-C16-OH, ND-C11-NH₂. Another option is to use a ligand that contains a functional group for further grafting. Such ligands are e.g. NDOPA (nitro-DOPA, preferably 6-nitro-DOPA) or ND. That contain an amino, carbonic acid, or nitro group, or combinations thereof such as in NDOPA. Thus also small, possibly hydrophilic, ligands are possible, that lack a hydrophobic part. The new or other ligands can be grafted (bound) to the nanoparticle surface with high densities on the nanoparticle core surface, e.g. 1 molecules/nm² or more, 2 molecules/nm² or more or 2.5 molecules/nm² or more or 3 molecules/nm² or more. The further organic ligand should be different than the original organic ligand present on the nanoparticles provided in step a).

It is possible to perform this step of attaching the further ligand in one volume as step c), i.e. the further ligand may be present in the replacement reaction of the (original= organic ligand by the replacement ion. The further ligand in turn will replace the replacement ion or attach to the surface when the replacement ion has been removed, e.g. by a solvent, that is usually a polar solvent.

Also provided are such new nanoparticles with removed original organic ligand (possibly with bound replacement ions) or with new or further ligands bound thereto as obtainable according to the inventive method - especially with the new high grafting densities.

Preferably, in the inventive method a plurality of the herein described nanoparticles are reacted. A "plurality" as used herein refers to several particles, which may differ within certain parameter thresholds in parameters such as size. The amount of the particles can be at least 100, at least 1000, at least 10000, at least 100000, at least 1 Mio., at least 10 Mio. etc.. Preferred ranges are e.g. 1x10⁶ to 1x10²⁰ nanoparticles.

Also provided is a kit suitable for removing an organic ligand from an inorganic nanoparticle according to the invention, said kit comprising i) a halide salt, preferably a fluoride salt, ii) a chelating agent, preferably a crown ether, wherein said chelating agent is suitable for forming a complex with the cation of said halide salt, preferably wherein the crown ether is 15-crown-5 and said cation is sodium or said crown ether is 18-crown-6 and said cation is potassium or sodium, iii) a hydrophobic solvent, preferably an alkane like hexane, and iv) a polar organic solvent suitable to dissolve the chelating agent, preferably a C₁-C₅ alcohol like isopropanol. Preferably the hydrophobic solvent is a non-solvent or inferior solvent of the chelating agent than the polar solvent, preferably wherein solubility of the crown ether in the polar solvent is at least 2 times or at least 10 times greater than solubility in the hydrophobic solvent at standard ambient conditions (25°C, 1 bar). These compounds can be used in the inventive method. The salt of component i) comprises the replacement salt and the counterion and can be used to displace an organic ligand from a nanoparticle in the inventive reaction. The chelating agent or chelator is suitable to chelate the counterion. The hydrophobic (or non-polar) solvent of compound iii) shall be suitable to disperse, suspend and/or solvate the nanoparticle with the organic ligand. The polar solvent of compound iv) can be used to solvate the chelating agent and thus bind the counterion and/or to collect the inorganic particles with removed organic ligands. The hydrophobic and polar solvents shall be immiscible. In other cases they may be miscible. Of course, also kits with any other components as disclosed herein for the function of compounds i), ii), iii) and iv) as described herein can be provided.

The present invention is further illustrated by the following examples without being limited to these embodiments of the present invention.

### Figures:

Figure 1: Mechanism of stripping of OA capped NCs using 15-crown-5 and NaF. Mechanisms for other Na⁺ and K⁺ salts are analogous.
Figure 2: a) TEM images of OA-capped iron oxide NCs. The inset on left shows NPs capped with oleic acid in Hexane and b) NCs stripped naked by crown ether. The inset on right shows high magnification TEM of naked NCs.
Figure 3: A) ATR-FTIR spectra of OA capped and naked NCs. B) NMR spectra of isolated shell from OA capped and naked NCs.
Figure 4: TGA graphs of 11 nm OA-capped, naked and palmityl-nitrodopamide (ND-C16) coated NCs. Inset shows TEM image of re-grafted ND-C16 NCs.
Figure 5: Nitrodopamide-anchored ligands with different lengths and terminal groups re-grafted on naked NCs.
Figure 6: Thermogravimetric analysis of 11 nm SPION collected after 24h stripping using 15-Crown-5 and sodium salts with anions: F⁻, Cl⁻, Br⁻ and I⁻ and OA-capped SPION before stripping are shown as comparison.
Figure 7: Thermogravimetric analysis of re-grafted SPION using various ligands: ND-C16, ND-C11-SH, ND-C11-Br and ND-C8, ND-C16-OH. As comparison the pure ND-C16 and OA-coated SPION are shown. The re-grafting density was in all cases ∼3 molecules/nm².

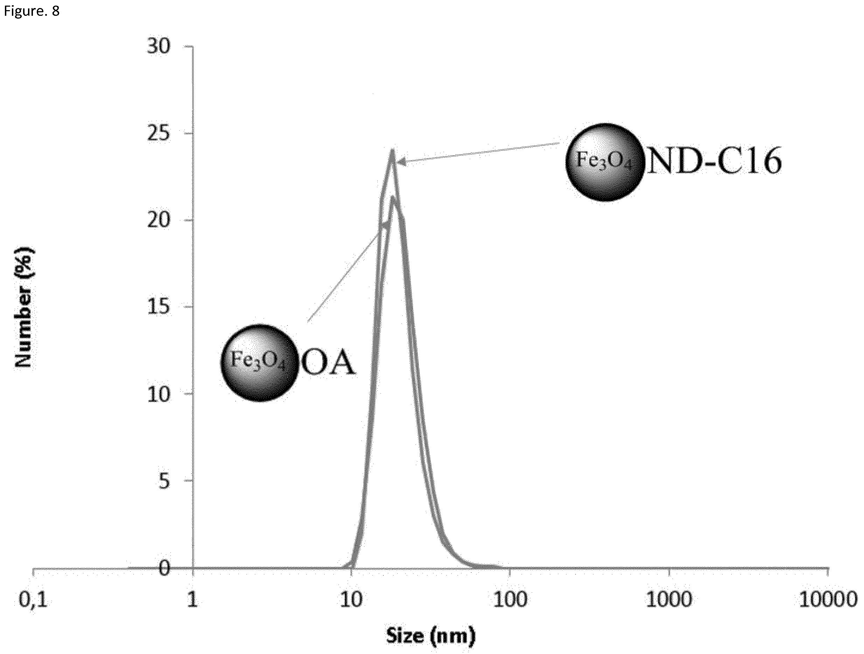

Figure 8: Size distribution of original and re-grafted nanoparticles.

### Examples:

### Chemical formulas and abbreviations used for ligands

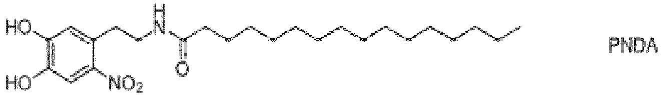

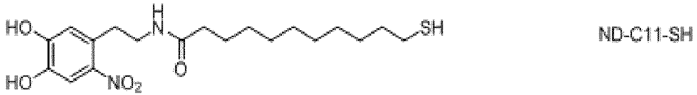

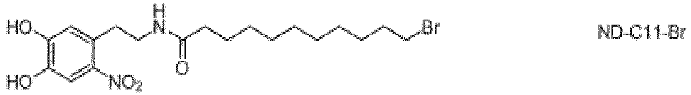

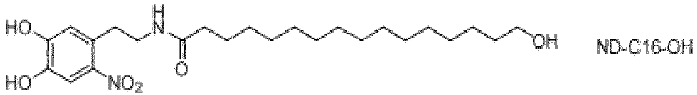

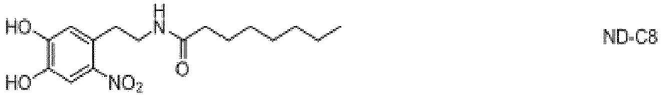

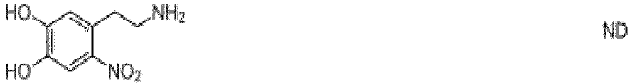

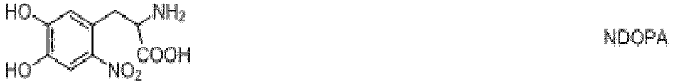

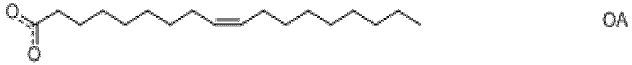

### Example 1: Synthesis of superparamagnetic iron oxide nanoparticles (SPIONs):

Oleic acid (OA) capped superparamagnetic iron oxide nanoparticles (OA-SPION) were synthesized via thermal decomposition of iron pentacarbonyl (Hyeon et al. Journal of the American Chemical Society 2001, 123, 12798). All materials were used as received without further purifications. In a typical procedure 1 ml of iron pentacarbonyl was quickly injected into a N2-saturated solution of 50ml dioctylether containing certain amount of oleic acid (for example 10ml to obtain 11nm SPIONs) at 100°C. The temperature was then gradually raised to 290°C with a ramp of 3K/min and held for 1h. The as-synthesized magnetite nanoparticles were subsequently cooled to room temperature, precipitated from excess of EtOH and collected with external magnet. The particles were washed 3 times with ethanol and centrifuged at 5000 rpm for 1 minute to remove the large excess of oleic acid and dioctylether. The diameter of the resulting highly monodisperse and monocrystalline Fe₃O₄ particles were 11 nm, calculated by the freeware Pebbles (Mondini et al. Nanoscale 2012, 4, 5356).

### Example 2: Stripping of oleic acid capped SPIONs with sodium halides:

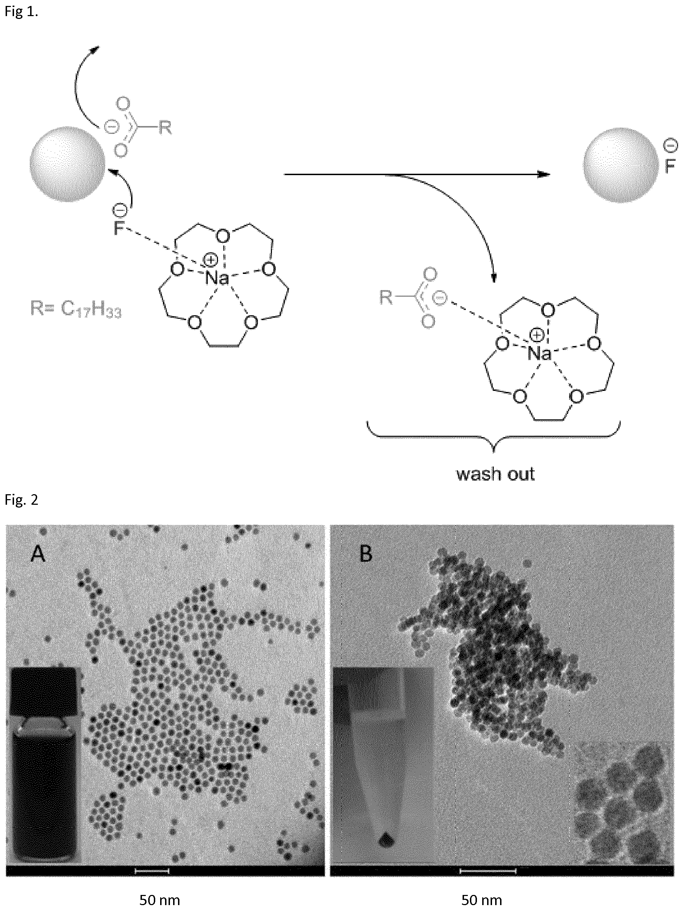

15-crown-5 (250 mg, ∼ 1.135 mmol (M=220.27 g/mol)) and NaF (50 mg, ∼ 1.191 mmol (M=41.99 g/mol)) were dissolved in 1 ml water and added to a mixture of 10 ml hexane solution of nanoparticles (25 mg/ml) and 7 ml isopropanol. The reaction proceeded at ambient temperature and neutral pH. Crown ether strongly coordinates Na⁺ from added salts to obtain the naked nucleophilic anion (Fig. 1). A small naked anion can displace the deprotonated oleic acid at the nanoparticle (SPION) surface. Displaced oleic acid is washed away. The stripped nanoparticles precipitate immediately after gentle shaking of the nanoparticle dispersion and can subsequently be spun down via centrifugation, with addition of isopropanol to decrease the surface tension of the solvent interface during centrifugation. Precipitated nanocrystals were washed several times with hexane, isopropanol, water, respectively to remove residues of OA, salt and crown ether.

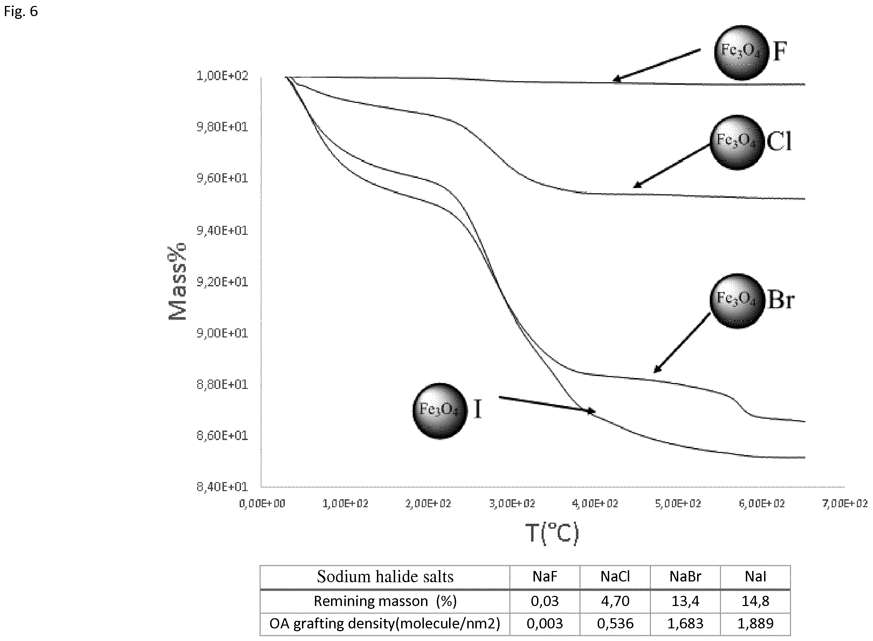

Stripping of OA-capped SPIONs was done using different sodium halides and 15-Crown-5. A strong size dependent trend for efficiency of anions to strip OA from SPIONs was observed. SPION were for all salts collected after 24h of phase transfer to water and analyzed by thermogravimetric analysis (TGA). As shown in Fig. 6, F⁻ succeeds to remove completely the deprotonated OA as also confirmed by NMR and ATR-FTIR. The other halides are bigger than oxygen anions, and are less efficient to displace OA from the surface of the SPIONs. A trend is however observed that after phase transfer, with all samples collected after 24h, the larger the size of the anion, the larger the remaining OA surface coverage. Cl⁻ thus removed most of OA, while a substantially larger amount of residual OA was observed for Br⁻ and I⁻.

**Table 1. The fraction of remaining organic content on particles stripped using 15-Crown-5 and sodium salts of the tabulated anions, calculated from data in Fig. 6. The average surface coverage of OA after stripping is calculated using the total organic content (TOC) measured by TGA, the molecular weight of OA and the SPION surface area determined by TEM.**

| Anion | F⁻ | Cl⁻ | Br⁻ | I⁻ |
|---|---|---|---|---|
| TOC (%) | 0.03 | 4.7 | 13.4 | 14.8 |
| Surface coverage of residual OA (molecules/nm²) | 0.003 | 0.536 | 1.683 | 1.889 |

### Example 3: Synthesis of nitrocatechol containing Ligands: Nitrodopamine (ND):

Nitrodopamine was synthesized according to literature with slight modifications. 5g dopamine hydrochloride (26.5mmol) and 7.3g sodium nitrite (4eq) were dissolved in 150ml milliQ water and cooled in an ice bath. 20ml of 20%v/v sulfuric acid were added dropwise under vigorous stirring to the cooled solution while maintaining a temperature below 10°C. After complete addition, the reaction mixture was slowly warmed to room temperature and stirred for 12h. The resulting yellow precipitate was collected by filtration and washed generously with ice-cold water, once with EtOH. ND was obtained as a bright yellow powder in 60% yield. ¹HNMR (300HZ, DMSO-D₆) 3.04 (m, 4H), 6.71(S,1H), 7.46(1H)

### Example 4: Palmityl-nitrodopamide (ND-C16):

ND was synthesized by coupling of nitrodopamine (1eq) with palmityl-NHS(1.1eq) in presence of 4-Methylmorpholine (NMM) (2eq) in dimethylformamide (DMF) and purified by solvent extraction (0.1 M HCl and DCM) and recrystallized in ethyl acetate and chloroform (1:1) at -20°C. ¹HNMR (300HZ, DMSO-D₆) : 0.84 (t, J=6.82, 3H), 1.22(s, 24H), 1.44(t, J=5.94, 2H), 2.00(t, J=7.48, 2H), 2.88(t, J=6.60, 2H) 3.23 (q, J=6.83, 2H), 6.88 (s, 1H), 7,47(s, 1H), 7,84(t, 1H), 9.80 (br, 1H), 10.32 (br, 1H)

### Example 5: 11-mercaptoundecanyl- Nitrodopamide (ND-C11-SH):

ND-C11-SH was synthesized by coupling of nitrodopamine (1eq) with 11-mercaptoundecanoic acid (1.1eq) using (1-Cyano-2-ethoxy-2-oxoethylidenaminooxy)dimethylamino-morpholino-carbenium hexafluorophosphate (COMU) (1.1eq) in presence of 4-Methylmorpholine (NMM) (2eq) in DMF and purified by solvent extraction (0.1 M HCl and DCM). ¹HNMR (300HZ, DMSO-D₆) : 1.25-1.73 (m, 16H), 2.18(t, 2H), 2.88(t, 2H), 3.07(t, 2H), 3.56 (t, 2H), 6.88 (s, 1H), 7,47(s, 1H), 7,83(t, 1H)

### Example 6: 11-bromoundecanoyl-Nitrodopamide (ND-C11-Br)

ND-C11-br was synthesized by coupling of nitrodopamine (1eq) with 11-mercaptoundecanoic acid (1.1eq) using (COMU) (1.1eq) in presence of 4-Methylmorpholine (NMM) (2eq) in DMF and purified by solvent extraction (0.1 M HCl and DCM). ¹HNMR (300HZ, DMSO-D₆):1.25-1.46(m, 16H),2.00(t, 2H),2.18(t, 2H),3.51 (t, 2H),6.88 (s,1H), 7,47 (s, 1H), 7,83(t, 1H)

### Example 7: 16-hydroxyundecanoyl- Nitrodopamide (ND-C16-OH)

ND-C16-OH was synthesized by coupling of nitrodopamine (1eq) with 11-mercaptoundecanoic acid (1.1eq) using (COMU) (1.1eq) in presence of 4-Methylmorpholine (NMM) (2eq) in DMF and purified by solvent extraction (0.1 M HCl and DCM) and recrystallized in ethyl acetate and chloroform (1:1) at -20°C. ¹HNMR (300HZ, DMSO-D₆) : 1.23 (S,26H), 1.39 (q, 4H), 1.99 (t , 2H), 2.87(q, 2H), 4.32 (br, 1H), 6.68 (S, 1H), 7.47(s, 1H), 7.86(t, 1H), 9.84 (br, 1H), 10.37 (br, 1H)

### Example 8: Octanoyl- Nitrodopamide (ND-C8)

ND-C8 was synthesized by coupling of nitrodopamine (1eq) with octylamine (1.1eq) using (COMU) (1.1eq) in presence of 4-Methylmorpholine (NMM) (2eq) in DMF and purified by solvent extraction (0.1 M HCl and DCM) and recrystallized in hot water ethanol. 1HNMR (300HZ, DMSO-D6):0.85 (t, 3H), 1.22(s, 24H), 1.44(t, 2H), 2.00(t, 2H), 2.89(t, 2H) 3.24 (q, 2H), 8.68 (s, 1H), 7,48(s, 1H), 7,83(t, J=5.36 1H)

### Example 9: NitroDOPA (NDOPA)

NitroDOPA (NDOPA) Synthesized via the same protocol described in example 3 (via nitration of L-DOPA). 1HNMR (300HZ, DMSO-D6): 3.12 (Q, 2H), 3.62(t, 2H),6.89 (s, 1H), 7,50(s, 1H)

### Example 10: Re-grafting of ligands on naked nanocrystals 1:

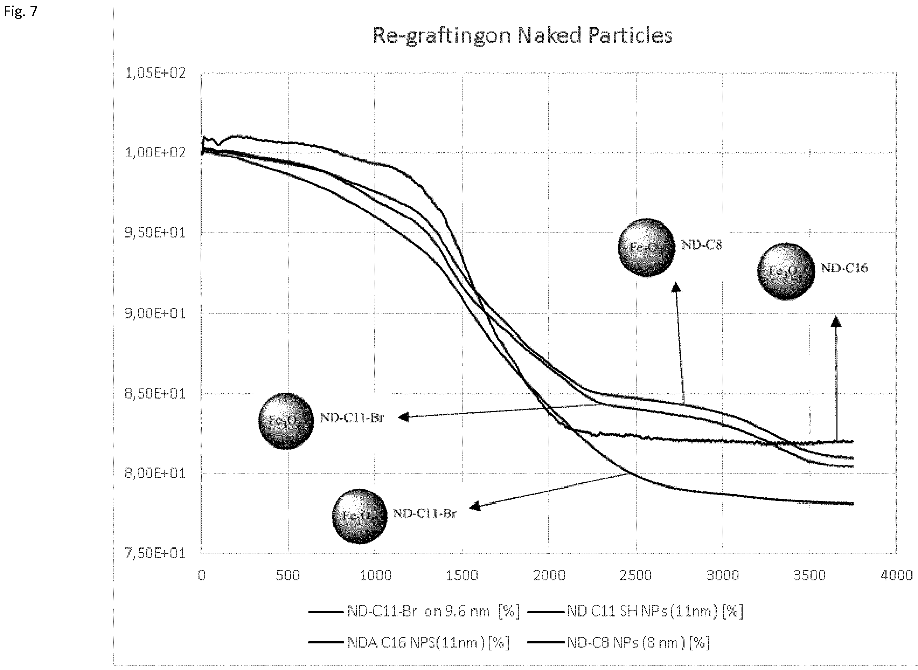

The naked SPION were dispersed partially in water using sonication. New ligands were dissolved in ethyl acetate and added to the nanocrystal suspension and sonicated for 4 hours. After 4h, particles transferred to ethyl acetate phase and aqueous phase discarded and ethyl acetate chloroform removed using rota-vapor. Dried particles dispersed in THF and centrifuged at 5000 rpm to remove any unmodified particles. Supernatant dried and excess of excess of ligand was washed out by methanol. The nanocrystals were suspended in methanol and sonicated for 1 min and centrifuged. This process repeated 3-4 times until the supernatant became colorless. The re-grafted SPION were dried under high vacuum (0.05 mbar) for TGA analysis for 2 days. The resulting NPs were completely dispersible in THF and showed a tentatively maximal grafting density for nitro catechol dispersants of ∼3 ligands/nm² (Fig. 7).

### Example 11: Re-grafting of ligands on naked nanocrystals 2:

The naked particles and ligand were added to a mixture of DMF:CHCl₃:MeOH and sonicated for 3 h. Solvent evaporated with rotary and particles precipitated after adding excess of diethylether. Particles re-suspended in aceton and sonicate and centrifuged to remove excess of ligand. This process continued until supernatant become clear. Particles dispersed in THF and centrifuged at 5000 rpm for 1 min to remove any unmodified particles dried under high vacuum (0.05 mbar, 2 days) for TGA analysis

**Table 2. Organic mass fraction of re-grafted ligands and original OA coating on NCs measured by TGA. The grafting density is calculated from the organic mass fractions using the molecular weight of the ligands and the SPION area calculated from TEM.**

| **Sample name** | **Organic mass (%)** | **Grafting density (molecules/ nm²)** |
|---|---|---|
| **ND-C16 (on 11nm SPION)** | **19** | **3.07** |
| **ND-C11-SH (on 11nm SPION)** | **20** | **3.59** |
| **ND-C11-Br (on 9.6nm SPION)** | **22** | **3.17** |
| **ND-C8 (on 8 nm SPION)** | **20** | **3.2** |

### Example 12: Results

Simple salts, such as NaF and NaCl, can be used by applying host-guest coordination of sodium (or potassium) salts with chelating agents such as crown ethers to release naked anions that drive ligand replacement. Nuclear magnetic resonance (NMR), infrared spectroscopy (ATR-FTIR), and thermogravimetric analysis (TGA) were used to prove removal of oleic acid (OA) from the surface of spherical, single-crystalline, superparamagnetic iron oxide nanocrystals synthesized with the method of Hyeon et al. (2001, supra). Stripped nanocrystals are subsequently re-grafted with different ligands.

15-crown-5 and NaF were dissolved in water and added to a mixture of isopropanol and hexane solution of nanoparticles. Crown ether strongly coordinates Na⁺ from added salts to obtain the naked nucleophilic anion (Fig. 1). The naked anion displaced the deprotonated oleic acid at the NC surface. The stripped NCs precipitate immediately after gentle shaking of the NC dispersion and can subsequently be spun down via centrifugation.

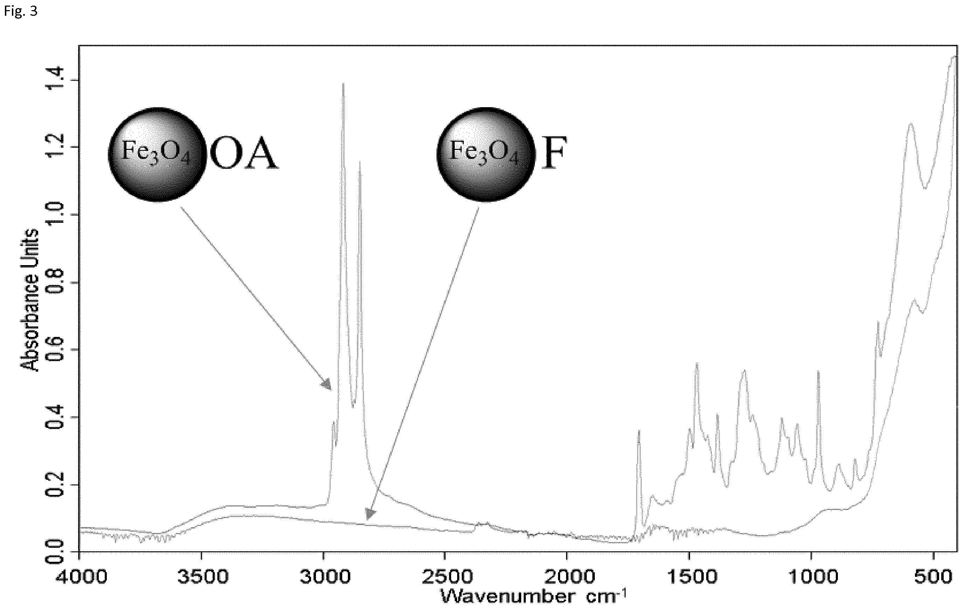

Ensuring the complete removal of OA is very important since controlling the ligand stoichiometry (by removing unnecessary ligand) on NCs can be relevant in some applications (Verma, A.; Uzun et al. Nature materials 2008, 7, 588). Complete removal of OA from NCs was confirmed by ATR-FTIR, NMR and TGA. ATR-FTIR spectra of stripped NCs in Fig. 3a show that the C-H stretching vibrations at 2800-3000 cm ⁻¹ and characteristic peaks of C=O at 1600-1715 cm⁻¹ have disappeared completely.

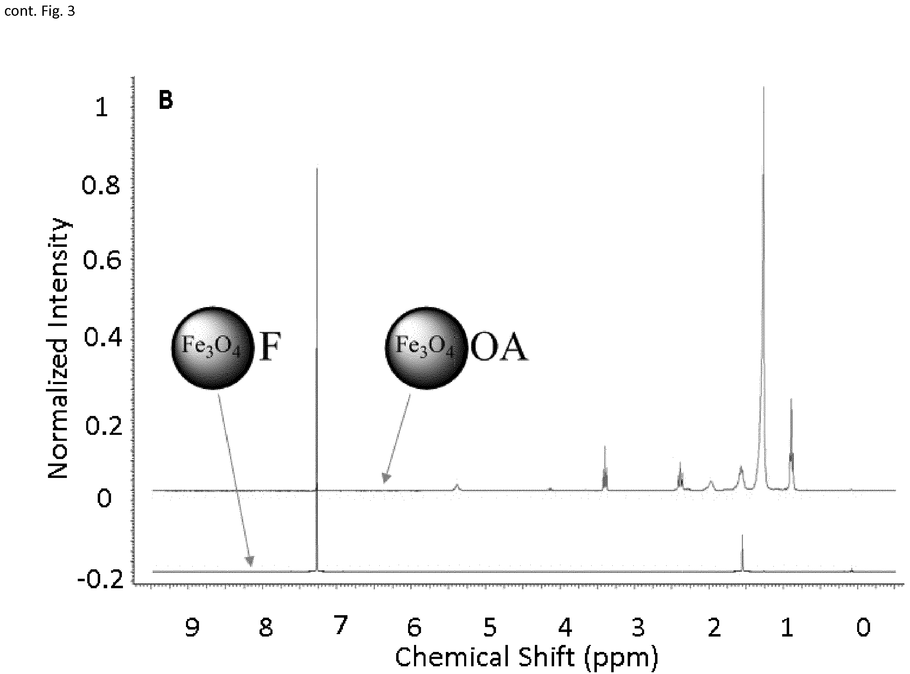

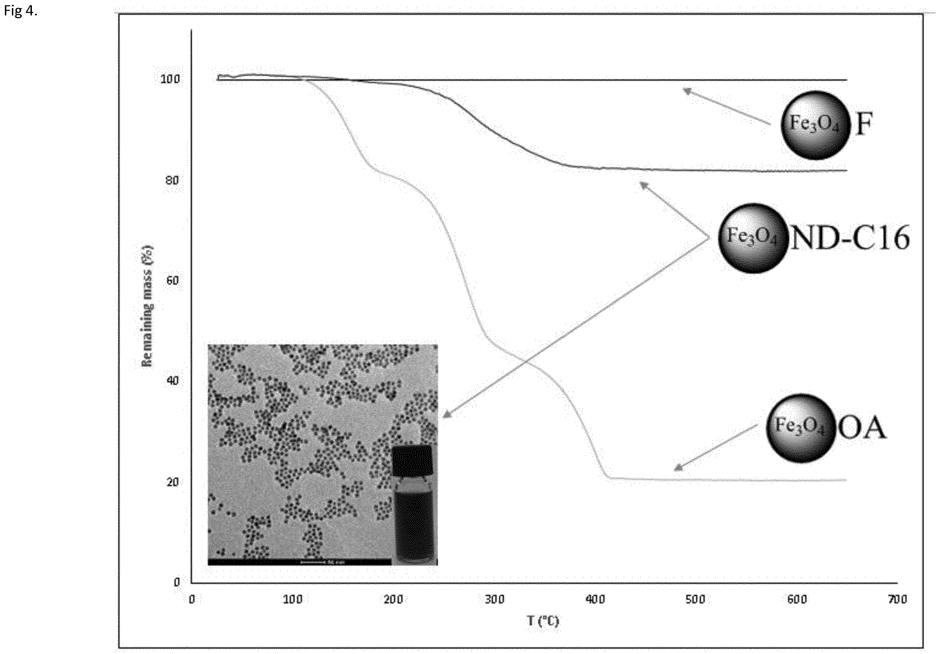

Since superparamagnetic iron oxide nanoparticles change the relaxation time and broaden the NMR spectra the core was dissolved in concentrated HCl and the shell material was extracted with chloroform. NMR spectra of the chloroform phase of NCs stripped with 15-crown-5 and NaF and washed did not show signals corresponding to OA or crown ether, which confirmed the complete removal of OA (Figure 3b). Finally, the TGA data in Fig. 4 shows that no organic content could be found in the naked NC sample.

The stripping process was tested with different anions including F⁻, Cl⁻, Br⁻, I⁻ (at the same molar amounts). All salts lead to precipitation of NC in the presence of crown ether. The precipitation is proof of removal of OA and destabilization of NCs. With F⁻ complete stripping was quickly observed according to TGA results (Fig. 6 and Table 1). Precipitation in the presence of F⁻ was complete already after 30 seconds shaking with 100% of OA removed while even after more than 1 day there were detectable organic ligand on the particles which treated with Cl⁻, Br⁻, I⁻. The trend in efficiency of stripping corresponds well to the size of anions.

F⁻ is a hard base and will desorb from the surface of NCs under protic solvent attack (protons being a hard acid). By washing in water, F⁻ can be displaced from the surface and solvated to leave completely naked NC, making the surface free to facile re-grafting with new functional ligands (Fig. 1). A complete removal of all F- from the surface is not required for re-grafting, only the excess from solution. After successful removal of OA, naked NCs were thus functionalized with ligands to form a dense shell using irreversible grafting of ligands anchored by nitrodopamide (Amstad et al. Nano letters 2009, 9, 4042). The naked SPION were dispersed partially in water using sonication. Ligands to be re-grafted were dissolved in ethyl acetate and added to the nanocrystal suspension and sonicated for 4 h. Particles were transferred to ethyl acetate phase dried and washed in aceton.

Naked particles and ligand could also be added to a mixture of DMF:CHCl₃:MeOH and sonicated for 3 h. Solvent evaporated with rotary and particles precipitated after adding excess of diethylether. Particles re-suspended in aceton and sonicate and centrifuged to remove excess of ligand. This process continued until supernatant become clear. Particles dispersed in THF and centrifuged at 5000 rpm for 1 min to remove any unmodified particles dried under high vacuum (0.05 mbar, 2 days) for TGA analysis.

For re-grafting hydrophilic and/or polar ligand directly to OA-capped particles, the hydrophilic and/or polar ligand (e.g. NDOPA) and crown ether complex with replacement salt were added to a mixture of DMF:CHCl₃ and sonicated. Then particles were precipitated by adding diethylether, suspended in DMF and washed several times with hexane, which forms a two-phase system). Particles precipitated by addition of acetone were dialyzed against water and freeze dried for analysis.

TGA results for NCs re-grafted with palmityl-nitrodopamide are shown in Fig. 4. After removal of excess ligand, the new ligand comprised an extraordinary 19% TOC of the NC. This corresponds to 3.07 molecules/ nm² and is higher than what was achieved after an extensive multi-step protocol for direct ligand exchange (2.7 molecules/nm²) for 3.5 nm iron oxide nanoparticles. This grafting density corresponds closely to the theoretical maximum grafting density expected for nitrocatechols on iron oxide (Amstad et al. Nano letters 2011, 11, 1664; Bixner, 2015, supra). The re-grafted particles showed perfect dispersability in THF as expected. TEM images after re-grafting with new ligand (inset Fig. 4) shows no change in size or shape compared to the initial OA capped NCs.

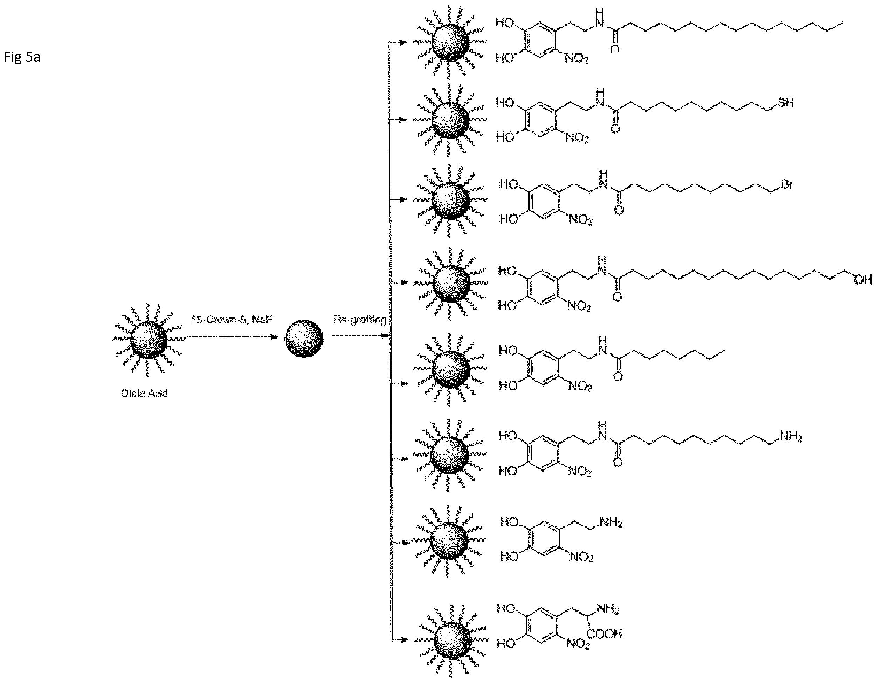

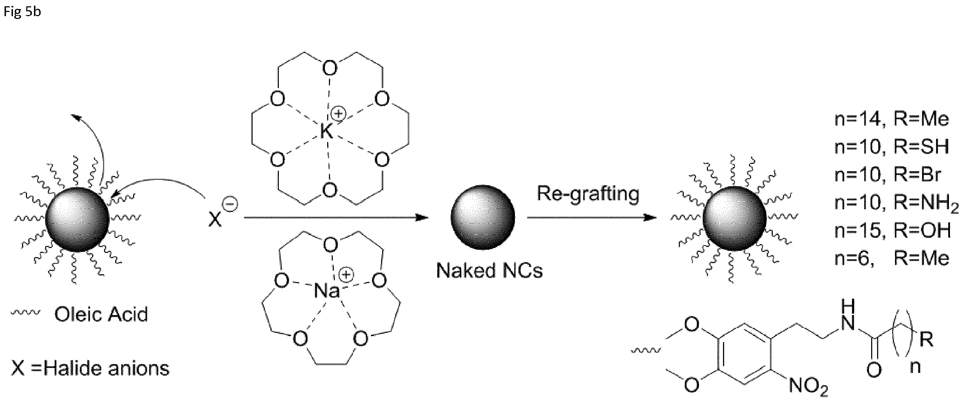

Other nitrodopamide-anchored ligands were re-grafted with various length and terminal groups (-SH, -Br, -OH, -NH₂, -COOH) that are potentially useful for further modification via disulfide coupling, click chemistry , esterification or amidation (Fig. 5). These particles had a grafting density of ∼3 ligands/nm² on the NC surface measured by TGA (Fig. 7 and Table 2),. Therefore, it seems that optimal re-grafting of the theoretically achievable maximum grafting density was consistently achieved.

In summary, chelating agents, like crown ethers, can be used to completely remove strongly bound ligands from the surface of NCs at ambient temperature and neutral pH using generally available simple salts, such as sodium or potassium salts. Faster kinetics were observed for small halogens and complete displacement of OA was observed for F⁻ on iron oxide nanoparticles; F⁻ is small enough to intercalate and displace oxygen on the NC surface. NCs stripped naked could easily be re-grafted with ligands of varied length and functional groups thanks to the weak electrostatic interaction of anion and NC surface cation. The theoretical maximum grafting density for nitrodopamide-anchored ligands could be achieved regardless of ligand functionality. Ligand replacement can be done on any NCs, e.g. semiconductor QDs, for which OA and similar complexed ligands can be replaced by halides to increase air stability and charge transfer. The replacement ion should then be chosen to match the hardness or softness of the nanoparticle core.

## Claims

1. The method of producing inorganic nanoparticles with a polar surface,
a) providing an inorganic nanoparticle with a coordinated organic ligand to the nanoparticles surface,
b) providing a replacement salt comprising a replacement ion and a counterion,
c) treating the inorganic nanoparticle having the coordinated organic ligand with the replacement salt in the presence of a chelating agent that complexes the counterion, thereby increasing the replacements ion's effective reactivity and replacing the organic ligand on the nanoparticle surface by the replacement ion which results in an inorganic nanoparticle with a polar surface.

2. The method of claim 1, wherein the organic ligand is a surfactant, preferably an ionic surfactant, especially preferred a carboxylate, such as a fatty acid, preferably oleic acid.

3. The method of claim 1 or 2, wherein the replacement ion is a halogen, preferably F⁻, Cl⁻, Br⁻ or I⁻.

4. The method of any one of claims 1 to 3, wherein the counterion is an inorganic ion, preferably a monovalent metal ion, especially preferred Na⁺, K⁺ or Li⁺.

5. The method of any one of claims 1 to 4, wherein the chelating agent is a heterocyclic molecule, preferably a crown ether or a cryptand.

6. The method of any one of claims 1 to 5, wherein at least 50%, preferably at least 60%, at least 70%, at least 80% or at least 90%, of the coordinated organic ligand are removed from the inorganic nanoparticle surface in step c).

7. The method of any one of claims 1 to 6, wherein step c) is performed in a fluid phase, preferably in a hydrophobic liquid medium, and inorganic nanoparticle with a polar surface are continuously removed from said fluid phase.

8. The method of any one of claims 1 to 7, wherein step c) comprises a treating in a two-phasic fluid, preferably comprising a hydrophobic phase and a polar phase, especially preferred wherein inorganic nanoparticles with a polar surface are collected from the polar phase after or during step c).

9. The method of any one of claims 1 to 8, wherein the inorganic nanoparticle is a nanocrystaline metal compound, preferably comprising an oxide or chalcogenide, even more preferred comprising iron, most preferred comprising an iron oxide.

10. The method of any one of claims 1 to 9, wherein the inorganic nanoparticle has a size of 1 to 400 nm or wherein the inorganic nanoparticle is provided in a plurality of inorganic nanoparticles with an average size of 1 to 400 nm.

11. The method of any one of claims 1 to 10, wherein the chelating agent has a higher affinity to the counterion than to the replacement ion.

12. The method of any one of claims 1 to 11, further comprising step d) removing the replacement ion on the inorganic nanoparticle surface by a solvent, preferably water, or by another ionic molecule or ion, preferably a molecule or ion of larger molecular or ionic size than the replacement ion and/or of higher affinity to the inorganic nanoparticle surface than the replacement ion.

13. The method of any one of claims 1 to 12, comprising the step of adding a further organic ligand to the polar surface of the particles obtained in step c), preferably wherein said adding step is performed in the same volume as steps c).

14. The method of any one of claims 1 to 13, wherein the inorganic nanoparticle with a coordinated organic ligand are produced by thermal decomposition of an inorganic nanoparticle-forming cation, preferably a cation of a transition metal, in the presence of the organic ligand.

15. A kit suitable for removing an organic ligand from an inorganic nanoparticle according to any one of claims 1 to 14, said kit comprising i) a halide salt, preferably a fluoride salt, ii) a chelating agent, preferably a crown ether, wherein said chelating agent is suitable for forming a complex with the cation of said halide salt, preferably wherein the crown ether is 15-crown-5 and said cation is sodium or said crown ether is 18-crown-6 and said cation is potassium or sodium, iii) an hydrophobic solvent, preferably an alkane like hexane, and iv) a polar organic solvent suitable to dissolve the chelating agent, preferably a C₁-C₅ alcohol like isopropanol; preferably wherein the hydrophobic solvent is a non-solvent or inferior solvent of the chelating agent than the polar solvent, preferably wherein solubility of the chelating agent in the polar solvent is at least 2 times, preferably at least 10 times, greater than solubility in the hydrophobic solvent at standard ambient conditions (25°C, 1 bar).
